# EUROPEAN PATENT SPECIFICATION

(11) **EP 2 170 909 B1**
(45) Date of publication and mention of the grant of the patent: **26.01.2011**
(21) Application number: 08786557.2
(22) Date of filing: 29.07.2008
(51) Int. Cl.: C07F 7/18, C07D 499/12, C07D 501/06

(54) **PROCESS FOR THE SILYLATION OF BETA-LACTAM COMPOUNDS**
VERFAHREN ZUR SILYLIERUNG VON BETA-LACTAM-VERBINDUNGEN
PROCÉDÉ DE SILYLATION DE COMPOSÉS BÊTA-LACTAME

(30) Priority: 30.07.2007 EP 07113422
(43) Date of publication of application: 07.04.2010
(73) Proprietor: DSM IP Assets B.V., 6411 TE Heerlen (NL)
(72) Inventor: PLUGGE, Willem, NL-2645 MG Delfgauw (NL); KUIPERS, Karel Hendrik, NL-2612 CC Delft (NL); VAN DER ZALM, Johannes Albert, NL-2681 JM Monster (NL)
(74) Representative: Misset, Onno
(86) International application number: PCT/EP2008/059919
(87) International publication number: WO 2009/016170

(56) References cited:
- US-A- 4 358 588
- US-A- 4 400 509

## Description

The present invention relates to a process for the silylation of a β-lactam compound, to a process for the production of a semi-synthetic β-lactam antibiotic and to the use of ammonium chloride in a process for the silylation of a β-lactam compound.

Semi-synthetic β-lactam antibiotics (SSA's) are produced on an industrial scale starting from β-lactam intermediates such as 6-aminopenicillanic acid (6-APA), 7-amino-desacetoxy-cephalosporanic acid (7-ADCA), 7-aminocephalosporanic acid (7-ACA) and 7-amino-3-chloro-3-cephem-4-carboxylate (7-ACCA), 7-amino-3-[(Z/E)-1-propen-1-yl]-3-cephem-4₋carboxylate (7-PACA) and others.

Semi-synthetic penicillins (SSP's) are obtained by coupling a desired side chain to the 6-amino-group of the 6-APA molecule. Well known SSP's are amoxicillin (hydroxyphenylglycyl-6-APA) and ampicillin (phenylglycyl-6-APA). Likewise, semi-synthetic cephalosporins (SSC's) are obtained by coupling a desired side chain to the 7-amino-group of the 7-ADCA, 7-ACA, 7-ACCA, 7-PACA or other intermediates. Well known SSC's are cephalexin (phenylglycyl-7-ADCA), cefadroxil (hydroxyphenylglycyl-7-ADCA), cephradine (dihydrophenylglycyl-7-ADCA), cefaclor (phenylglycyl-7-ACCA) and cefprozil (hydroxyphenylglycyl-7-PACA).

Coupling of the desired side chain to the β-lactam intermediate traditionally has been carried out using chemical synthesis in an organic solvent system and is still being used today; more recently, enzymatic coupling processes in aqueous systems using suitable acylase enzymes have been developed.

In the process using chemical synthesis of an SSA, usually, as a first step, the corresponding β-lactam intermediate is silylated in order to protect the free carboxyl-group which is present in the corresponding β-lactam intermediate and also to improve the solubility of the β-lactam intermediate in the organic solvent system. In most organic solvent systems used for the chemical coupling of the side chain to the β-lactam intermediate, the latter is insoluble, while the silylated derivative has a much higher solubility. In 6-APA, this carboxyl-group is at the 3-position of the 5-membered ring and in the cephalosporin intermediate (e.g. 7-ADCA, 7-ADA, 7-ACCA, 7-PACA or others) the corresponding carboxyl-group is at the 4-position of the 6-membered ring.

GB 1,073,530 (1967) discloses the use of certain silyl chlorides or amines in a process of making a silylated cephalosporin intermediate in an organic solvent system. This process is carried out at temperatures up to 170°C and requires the removal of side products by distillation. US 3,694,437 (1972) discloses silylation of several cephalosporin intermediates such as 7-ADCA and 7-ACA in a substantially anhydrous, aprotic liquid solvent, at a temperature of from -50°C to +50°C while using silyl amide compounds. Japanese patent 52-59296 (1979) discloses a process for the synthesis of amoxicillin whereby 6-APA is silylated using several silyl-amide compounds in an anhydrous acetic acid ester solvent (e.g. ethyl-acetate, propyl-acetate and others). This process has an optimum reaction temperature of about 50°C and the reaction is completed within 0.5-1.5 hour. US 4,358,588 (1982) discloses a process for preparing cephalosporanic acid compounds wherein the silylation reaction of 7-ADCA is carried out in an inert water-miscible solvent such as acetonitrile or in an inert water-immiscible solvent to which a relatively small volume of a co-solvent is added (e.g. dipolar aprotic solvents). As silylation agents US 4,358,588 teaches the use of trimethylchlorosilane (TMCS) in the presence of a tertiary amine or other compounds such as trimethylsilylacetamide, N,N-bis-trimethylsilylacetamide, hexamethyldisilazane and N,N-bis-trimethylsilylurea. US 4,504,657 (1985) describes a process for the production of cephadroxil monohydrate whereby 7-ADCA is silylated in an inert substantially anhydrous aprotic solvent (e.g. methylene chloride, tetrahydrofuran, chloroform, tetrachloroethane, nitromethane, benzene, diethyl ether). When trimethyl chlorosilane is employed as the silylating agent, the reaction must be carried out in the presence of an acid (HCl) acceptor such as a nitrogen base (e.g. triethylamine, dimethylamine, quinoline, lutidine, pyridine). When a silazane is employed as the silylating agent, the reaction step is conveniently effected by heating the silazane and 7-ADCA so that ammonia or amine derivatives formed a by-products of the reaction are distilled off. In US 5,142,043 (1992) cephalexin monohydrate, prepared by the silylation of 7-ADCA , is obtained in high yield and of improved purity when the silylation step is carried out by refluxing in a solvent having a boiling point of over 100°C (e.g. toluene having a boiling point of 110.6°C and xylene having a boiling point of 138.4°C). At these high temperatures, a catalyst for the silylation reaction (e.g. saccharine) is not required. In contrast, at lower temperatures, e.g. in toluene at 90°C or methylene chloride having a boiling point of only 40°C, a catalyst is required. WO96/16067 (1996) and US 5,998,610 (1999) describe a process for the silylation of 6-APA and 7-ADCA in certain carboxylic acid esters. WO96/16067 discloses many silylation agents which are common for the silylation of 7-ADCA or 6-APA; including silanes, such as trichlorosilane or alkylsilanes, such as trialkylmonochlorsilane, e.g. trimethylchlorosilane, dialkyldichlorosilanes; silylated amides, such as bissilylacetamide, e.g.N,O-bis(trimethylsilyl)acetamide, N,N'-bis-trimethylsilylmalonic acid amide,N,N'-bis-trimethylsilylsuccinic acid amide, N-methyl-N-trimethylsilyltrifluoroacetamide; N,N'-bistrimethylsilylmalonic acid diamide, N,N'-bistrimethylsilylsuccinic acid diamide; silylated ureas such as bissilylurea, e.g. N,N-bis(trimethylsilyl)urea, hexamethyl-disilazane. A catalyst may be employed in the process of WO96/16067 but is not really necessary. A suitable catalyst mentioned is an amine, in particular a trialkylamine; an amide, for example a cyclic amide, e.g. saccharin; an acidic catalyst, for example an organic acid, e.g. trichloroacetic acid, trifluoroacetic acid, oxalic acid, p-toluenesulphonic acid or an inorganic acid, e.g. hydrochloric acid, sulphuric acid; or a salt, e.g. ammonium sulphate, potassium acetate. For the production of cefadroxil with a water content in the range of 4-5%, WO2004/035593 discloses as a first step the silylation of 7-ADCA in methylene chloride using TMCS and hexamethyldisilazane as the silylating agents while stirring the mixture for 120-130 minutes at 38-46°C. For the preparation of various 7-amino (p-hydroxyphenylglycyl) cephem compounds, W02004/083172 has as a first step the silylation of corresponding cephalosporin intermediates such as 7-ADCA with silylation agents in a solvent inert under the reaction conditions. Examples of silylation agents include mono-or bissilylated amides, such as N, 0-bis-(trimethylsilyl)-acetamide (BSA), N-methyl-N-trimethylsilylacetamide (MSA); silylated ureas such as N, N'-bis-(trimethylsilyl)urea (BSU) ; or silazanes such as 1 1 3, 3,3- hexamethyldisilazane (HMDS), in combination with a halosilane such as trimethylchlorosilane, dimethyldichlorosilane or an amine, such as triethylamine, tert. octylamine.

Despite the long history of silylation reaction technology, there is still a need for an improved silylation process for β-lactam compounds, in particular β-lactam intermediates. The major improvement to be achieved for the industrial application of the silylation process is that it can be carried out in a short time and that the process is as cheap as possible, i.e. avoiding the use of expensive organic solvents, silylating agents or catalysts. Also, low temperatures are preferred on the one hand because of the instability of β-lactam compounds at elevated temperatures (decreased yields) and on the other hand because of energy consumption (costs). We have now surprisingly found that the silylation reaction of a β-lactam compound such as a β-lactam intermediate can be accelerated substantially by adding an effective amount of ammonium chloride and/or the HCl salt of an organic amine to the silylation reaction mixture.

In a first aspect, the invention provides a process for the silylation of a β-lactam compound in an organic solvent comprising one or more silylating agents characterized in that the process is carried out in the presence of an effective amount of ammonium chloride and/or the HCl salt of an organic amine. The β-lactam compound may be any β-lactam compound possessing a group, for example a carboxyl-group which may be subjected to silylation. Preferably, the β-lactam compound is a β-lactam intermediate which may be used in the industry for the chemical synthesis of semi-synthetic β-lactam antibiotics. Well-known β-lactam intermediates which are used in industry for the production of semi-synthetic β-lactam antibiotics are 6-APA, 7-ADCA, 7-ACA, 7-ACCA and 7-PACA. Preferred, β-lactam intermediates are 6-APA or 7-ADCA, most preferred is 7-ADCA. Preferably, the carboxyl-group present on the penem (e.g. 6-APA) or cephem (e.g. 7-ADCA, 7-ACA, 7-ACCA and 7-PACA) ring structure of the β-lactam compound is silylated, preferably to an extent of at least 90%, more preferably at least 95%, most preferably at least 99%. Although the free amino-group of the β-lactam intermediates, such as the β-lactam intermediates listed hereinbefore may be subject to silylation, it is highly undesired within the scope of the present invention that the free amino-group is silylated. Preferably, the free amino group is silylated to an extent less than 10%, preferably less than 5%, more preferably less than 1%, most preferably less than 0, 1 %.

The advantage of using an effective amount of ammonium chloride and/or the HCl salt of an organic amine, is that the silylation reaction, as measured by the dissolution rate of the insoluble β-lactam compound such as a β-lactam intermediate, proceeds faster compared to the silylation reaction without an effective amount of ammonium chloride and/or the HCl salt of an organic amine.

The process of the invention may be carried out in an organic solvent comprising one or more silylating agents and in the presence of an effective amount of ammonium chloride and/or the HCl salt of an organic amine. The silylating agent may be any agent known to be able to silylate the carboxyl-group of the β-lactam compound as described hereinbefore. Examples of suitable silylating agents are for example silanes, such as trichlorosilane or alkylsilanes (e.g. a trialkylmonochlorosilane such as trimethylchlorosilane (TMCS) and dialkyldichlorosilanes); silylated amides such as bissilylacetamide (e.g.N,O-bis(trimethylsilyl)acetamide, N,N'-bis-trimethylsilylmalonic acid amide, N,N'-bis-trimethylsilylsuccinic acid amide, N-methyl-N-trimethylsilyltrifluoroacatamide; N,N'-bistrimethylsilylmalonic acid diamide, N,N'-bistrimethylsilylsuccinic acid diamide; silylated ureas such as bissilylurea, e.g. N,N-bis(trimethylsilyl)urea, hexamethyl-disilazan). Preferably the process is carried out in an organic solvent comprising only one silylating agent and in the presence of an effective amount of ammonium chloride and/or the HCl salt of an organic amine. In this embodiment, the silylating agent preferably contains two or more trimethylsilyl-groups such as bissilylacetamide (e.g. N,O-bis(trimethylsilyl)acetamide), N,N'-bis-trimethylsilylmalonic acid amide, N,N'-bis-trimethylsilylsuccinic acid amide, N-methyl-N-trimethyl-silyltrifluoroacetamide; N,N'-bistrimethylsilylmalonic acid diamide, N,N'-bistrimethylsilylsuccinic acid diamide) or silylated ureas such as bissilylurea (e.g. N,N-bis(trimethylsilyl)urea) or hexamethyl-disilazan. Preferably the process of the invention is carried out in an organic solvent comprising N,N-bis(trimethylsilyl)urea or hexamethyl-disilazan, most preferably N,N-bis(trimethylsilyl)urea and in the presence of an effective amount of ammonium chloride and/or the HCl salt of an organic amine most preferably ammonium chloride.

In the process of the invention, the silylation reaction is carried out in the presence of an effective amount of ammonium chloride and/or the HCl salt of an organic amine, e.g. the HCl salt of triethylamine. Preferably, ammonium chloride is used. The skilled person is very well capable, without undue experimentation, to determine the effective amount of ammonium chloride and/or the HCl salt of an organic amine for a given silylation reaction. The effective amount will be determined amongst others by the specific reaction conditions of the silylation reaction such as the solvent used, the type and amount of the β-lactam compound, the concentration of the silylating agent(s), as well as the temperature during the reaction and the desired time of the reaction. In a preferred embodiment, the silylation reaction is carried out using between 0.05 and 0.5 gram/liter ammonium chloride and/or a corresponding amount of the HCl salt of an organic amine (based on molecular weight).

In the art, many organic solvents have been described for silylation reactions. Preferably, aprotic, non-polar, inert solvents are used such as DMF, dichloromethane, organic esters and/or others.

The effective amount of ammonium chloride and/or the HCl salt of an organic amine may be added to the silylation reaction mixture in the form of a dry solid or may be added together with a composition comprising the β-lactam compound such as a β-lactam intermediate. In the latter case, the ammonium chloride and/or the HCl salt of an organic amine may be mixed with the composition comprising the β-lactam compound prior to being added to the silylation reaction mixture or the composition comprising the β**-**lactam compound may be produced in a separate production process in such a way that it contains the ammonium chloride and/or the HCl salt of an organic amine in required levels. In this embodiment, the composition comprising the β-lactam compound preferably a β-lactam intermediate such as 6-APA, 7-ADCA, 7-ACA, 7-ACCA or 7-PACA preferably comprises at least 90% at least 95%, more preferably at least 96%, more preferably at least 97%, more preferably at least 98% and most preferably at least 99% of the β-lactam intermediate and between 0.02 and 5 wt% of ammonium chloride and/or a corresponding amount of the HCl salt of an organic amine (based on molecular weight). The ammonium chloride content of the composition comprising the β-lactam intermediate comprises preferably between 0.02 and 4 wt%, more preferably between 0.03 and 3 wt%, more preferably between 0.04 and 2 wt% and most preferably between 0.05 and 1wt% of ammonium chloride and/or a corresponding amount of the HCl salt of an organic amine (based on molecular weight). The composition of the invention may further comprise water. Preferably, the water content is equal to or less than 0.5 wt%, more preferably equal to or less than 0.4 wt%, more preferably equal to or less than 0.3 wt% and most preferably equal to or less than 0.2 wt%.

In a second aspect, the invention provides a process for the production of a semi-synthetic β-lactam antibiotic comprising the following steps:
a. silylating a β**-**lactam intermediate using the process of the invention as described hereinbefore;
b. derivatizing the silylated β-lactam intermediate obtained in step (a) to obtain the desired semi-synthetic β-lactam antibiotic in silylated form; and
c. hydrolyzing the silyl group from the silylated semi-synthetic β-lactam antibiotic obtained in step (b) to obtain the semi-synthetic β-lactam antibiotic.
The β-lactam intermediate may be any suitable β-lactam intermediate for the production a semi-synthetic β-lactam antibiotic as has been described herein before. The semi-synthetic β-lactam antibiotic may be any well known semi-synthetic β-lactam antibiotic; preferably, the semi-synthetic β-lactam antibiotic is selected from the group consisting of amoxicillin, ampicillin, cephalexin, cefadroxil, cephradine, cefaclor and cefprozil.

The β-lactam intermediate used in the process of the present invention may be obtained from any suitable industrial production process. For instance 6-APA may be obtained from penicillin G (PenG) or penicillin V (PenV) via chemical or enzymatic cleavage of the phenylacetic acid side chain or hydroxyphenylacetic acid side chain respectively. Pen G and PenV are both secondary metabolites produced and excreted by the filamentous fungus *Penicillium chrysogenum* in large scale industrial fermentation processes (see R.P. Elander in Appl. Microbiol. Biotechnol (2003) 61:385-392 for a review), In some of these processes, PenG is produced in a crystalline form as an intermediate, in other processes, this step is avoided and the side chain is cleaved off directly in an aqueous PenG-solution obtained after extraction and back extraction of the Pen-G from the fermentation broth (e.g. WO98/40839). The first generation 7-ADCA product was derived from PenG whereby both the expansion of the 5-membered penem ring to the 6-membered cephem ring and the subsequent cleavage of the phenylacetic acid side chain of the phenylacetyl-7-ADCA were carried out using chemical reactions. The next generation 7-ADCA product was still obtained from PenG but after the chemical ring expansion, the phenylacetic acid side chain of the phenylacetyl-7-ADCA was cleaved off enzymatically using a suitable (penicillin) acylase. Processes have been developed wherein also the ring expansion of PenG to phenylacetyl-7-ADCA is carried out *in vitro* using a suitable expandase enzyme, but these processes are of little industrial importance. The most recent and most elegant production process for 7-ADCA comprises the culturing of a *Penicillium chrysogenum,* transformed with and expressing a gene encoding a suitable expandase. This *Penicillium chrysogenum* strain, when grown in the presence of adipic acid as the side chain precursor in the fermentation vessel, produces and excretes adipyl-7-ADCA (see WO93/05158). In this production process, the adipyl-7-ADCA is recovered from the fermentation broth, subjected to a suitable acylase to cleave of the adipic acid side chain after which the 7-ADCA thus obtained is further purified, crystallized and dried as described for instance in WO98/48035 and WO98/48036. Production of other β-lactam intermediates such as 7-ACA, 7-ACCA and 7-PACA has been amply documented in the patent and scientific literature and are known to the skilled person.

The silylation of the β-lactam intermediate according to the process of the invention has been described hereinbefore.

The derivatization of the silylated β-lactam intermediate to obtain the desired semi-synthetic β-lactam antibiotic in silylated form and the hydrolysis of the silyl group from the silylated semi-synthetic β-lactam antibiotic to obtain the semi-synthetic β-lactam antibiotic are processes well known in the art. See for example the prior art documents cited hereinbefore.

In a third aspect, the invention relates to the use of ammonium chloride and/or the HCl salt of an organic amine in a process for the silylation of a β-lactam compound in an organic solvent in the presence of one or more silylating agents.

### EXAMPLES

### Example 1

### Silylation time as a function of TMCS and ammonium chloride

The silylation time of 7-ADCA was measured as follows. Approximately 16 gram of 7-ADCA crystals and approximately 19 grams of bis-trimethylsilyl-urea (BSU) were added to a 3-neck round bottom flask of 500 ml (Duran Scott NS29.2/32) with the aid of a powder funnel. A stirring rod with Teflon blade (type Sovirel CN 29/32) and a control thermometer (LET 5450 DIN 12778 mounted in a glass stopper 29/32) were placed in the flask. The flask was placed in a waterbath which was adjusted to 25.5 ± 0.5°C (resulting in a reaction temperature of 25.0 ± 0.5°C). Subsequently 277 ml of DMF (chemical grade) was added. The stirring rod was connected to a stirrer (Janke and Kunkel, IKA werk, type RW 20 DZM) and the stirring speed was adjusted between 205 and 215 rpm.

TMCS (trimethylchlorosilane) was added to the flask (see table for quantities) and the flask was closed with a rubber stop to which a fiber optic probe is mounted. The fiber optic probe was connected to a Metrohm type 662 photometer which was adjusted to a wavelength of 625 nm.

The absorbance of the reaction mixture was measured at regular intervals (ca 10 minutes). The value of the absorbance of the initial reaction mixture was very high (>2 AU = absorbance units). Upon progress of the silylation reaction, the insoluble 7-ADCA dissolves which results in a decrease of the absorbance. The silylation time is defined as the time between the start of the reaction and the time point at which the absorbance has decreased to an AU-value of 0.1. The results are summarized in the table.

| **Experiment** | **TMCS (ml)** | **NH₄Cl (mg)** | **Silylation time (min)** |
|---|---|---|---|
| control | 0.10 | none | >240 |
| 1 | 0.10 | 200 | 150 |
| 2 | 0.05 | 200 | 150 |
| 3 | none | 200 | 150 |

In the control experiment (i.e. no ammonium chloride added), the AU remained at the initial value of >2 for at least 240 minutes (termination of the experiment). In the experiments with ammonium chloride added, the absorbance of the reaction mixture after a certain time decreased to a value below 2 and further dropped and reached the value of 0.1 (silylation time by definition) after approximately 150 minutes. TMCS did not contribute and even in the absence thereof, the same silylation time was obtained.

## Claims

1. A process for the silylation of a β-lactam compound in an organic solvent comprising one or more silylating agents **characterized in that** the process is carried out in the presence of an effective amount of ammonium chloride and/or the HCl salt of an organic amine.

2. A process according to claim 1, wherein the β-lactam compound is a β-lactam intermediate preferably selected from the group consisting of 6-APA, 7-ADCA, 7-ACA, 7-ACCA and 7-PACA.

3. A process for the production of a semi-synthetic β-lactam antibiotic comprising the following steps:
a. silylating a β-lactam intermediate using the process of claim 1 or claim 2;
b. derivatizing the silylated β-lactam intermediate obtained in step (a) to obtain the desired semi-synthetic β-lactam antibiotic in silylated form; and
c. hydrolyzing the silyl group from the silylated semi-synthetic β-lactam antibiotic obtained in step (b) to obtain the semi-synthetic β-lactam antibiotic.

4. A process according to claim 3 wherein the β-lactam intermediate is selected from the group as defined in claim 2.

5. A process according to anyone of claims 3 or 4 wherein the semi-synthetic β-lactam antibiotic is selected from the group consisting of amoxicillin, ampicillin, cephalexin, cefadroxil, cephradine, cefaclor and cefprozil.

6. Use of ammonium chloride and/or the HCl salt of an organic amine in a process for the silylation of a β-lactam compound in an organic solvent in the presence of one or more silylating agents.

## Patentansprüche

1. Verfahren zur Silylierung einer β-Lactamverbindung in einem organischen Lösungsmittel umfassend ein oder mehrere Silylierungsmittel, **dadurch gekennzeichnet, dass** das Verfahren in Gegenwart einer wirksamen Menge Ammoniumchlorid und/oder des HCl-Salzes eines organischen Amins durchgeführt wird.

2. Verfahren nach Anspruch 1, wobei es stich bei der
β-Lactamverbindung um ein β-Lactamzwischenprodukt, das vorzugsweise aus der Gruppe bestehend aus 6-APA, 7-ADCA, 7-ACA, 7-ACCA und 7-PACA stammt, handelt.

3. Verfahren zur Herstellung eines halbsynthetischen β-Lactamantibiotikums, umfassend die folgenden Schritte:
a. Silylieren eines β-Lactamzwischenprodukts unter Verwendung des Verfahrens nach Anspruch 1 oder Anspruch 2;
b. Derivatisieren des in Schritt (a) erhaltenen silylierten β-Lactamzwischenprodukts, wodurch man das gewünschte halbsynthetische β-Lactamantibiotikum in silylierter Form erhält; und
c. Hydrolysieren der Silylgruppe von dem in Schritt (b) erhaltenen silylierten halbsynthetischen β-Lactamantibiotikum, wodurch man das halbsynthetische β-Lactamantibiotikum erhält.

4. Verfahren nach Anspruch 3, wobei das β-Lactamzwischenprodukt aus der in Anspruch 2 definierten Gruppe stammt.

5. Verfahren nach einem der Ansprüche 3 oder 4, wobei das halbsynthetische β-Lactamantibiotikum aus der Gruppe bestehend aus Amoxicillin, Ampicillin, Cephalexin, Cefadroxil, Cephradin, Cefaclor und Cefprozil stammt.

6. Verwendung von Ammoniumchlorid und/oder des HCl-Salzes eines organischen Amins in einem Verfahren zur Silylierung einer β-Lactamverbindung in einem organischen Lösungsmittel in Gegenwart von einem oder mehreren Silylierungsmitteln.

## Revendications

1. Procédé de silylation d'un composé de β-lactame dans un solvant organique comprenant un ou plusieurs agents de silylation, **caractérisé en ce que** le procédé est effectué en présence d'une quantité efficace de chlorure d'ammonium et/ou du sel d'HCl d'une amine organique.

2. Procédé selon la revendication 1, **caractérisé en ce que** le composé de β-lactame est un intermédiaire de β-lactame choisi de préférence dans le groupe constitué de 6-APA, 7-ADCA, 7-ACA, 7-ACCA, et 7-PACA.

3. Procédé de production d'un antibiotique de β-lactame semi-synthétique comprenant les étapes suivantes :
a. la silylation d'un intermédiaire de β-lactame en utilisant le procédé de la revendication 1 ou de la revendication 2 ;
b. la dérivatisation de l'intermédiaire de β-lactame silylé obtenu dans l'étape (a) pour obtenir l'antibiotique de β-lactame semi-synthétique désiré sous forme silylée ; et
c. l'hydrolyse du groupement silyle de l'antibiotique de β-lactame semi-synthétique silylé obtenu dans l'étape (b) pour obtenir l'antibiotique de β-lactame semi-synthétique.

4. Procédé selon la revendication 3, **caractérisé en ce que** l'intermédiaire de β-lactame est choisi dans le groupe tel que défini dans la revendication 2.

5. Procédé selon l'une quelconque des revendications 3 et 4, **caractérisé en ce que** l'antibiotique de β-lactame semi-synthétique est choisi dans le groupe constitué d'amoxicilline, d'ampicilline, de céphalexine, de céfadroxil, de céphradine, de céfaclor et de cefprozil.

6. Utilisation du chlorure d'ammonium et/ou du sel d'HCl d'une amine organique dans un procédé de silylation d'un composé de β-lactame dans un solvant organique en présence d'un ou plusieurs agents de silylation.
